# EUROPEAN PATENT SPECIFICATION

(11) **EP 0 439 891 B1**
(45) Date of publication and mention of the grant of the patent: **27.12.1995**
(21) Application number: 90304071.5
(22) Date of filing: 17.04.1990
(51) Int. Cl.: B28C 5/42, B28C 7/16, B65G 11/00, B65G 11/14

(54) **Improved extension chute and connection therefor**
Verlängerbare Rutsche und zugehörige Verbindung
Glissoir extensible et ses attaches

(30) Priority: 26.01.1990 US 470915
(43) Date of publication of application: 07.08.1991
(73) Proprietor: McNeilus Truck and Manufacturing, Inc., Dodge Center, Minnesota 55927 (US)
(72) Inventor: Loefke, William Lee, Kasson, Minnesota 55944 (US); Christenson, Ronald Eugene, Kasson, Minnesota 55944 (US); McNeilus, Garwin Brydon, Dodge Center, Minnesota 55927 (US)
(74) Representative: Orr, William McLean

(56) References cited:
- DE-U- 8 029 210
- DE-U- 8 110 485
- GB-A- 1 207 295
- US-A- 4 054 194

## Description

### BACKGROUND OF THE INVENTION

### 1. Field of the Invention

This invention relates to mobile systems for mixing and dispensing concrete. More specifically, this invention relates to an improved chute structure for guiding concrete from a discharge end of a concrete mixer truck to a desired location.

### 2. Description of the Prior Art

Concrete mixing trucks such as those manufactured by the assignee of this invention, McNeilus Truck and Manufacturing Corporation of Dodge Center, Minnesota, are widely used in the construction industry for preparing and transporting a concrete mixture to a desired construction site.

In order to guide concrete into a set of forms or equivalent molding structure, most mixing trucks in commercial use today include a pivotable main discharge chute, a second chute which folds out from the main chute, and, optionally, additional extension chutes which connect to the foldout chute.

In order to withstand stresses which are created by the flux of wet concrete, discharge chute components need to possess a great deal of strength and wear resistance. At present, manufacturers have relied upon thick gauge sheet metal to construct chute components with the necessary strength and wear characteristics. Metal chute components have proven effective in guiding concrete. However, their weight makes the chute assembly difficult to reposition during use.

Another disadvantage with metal discharge chute components is their tendency to oxidize or otherwise corrode after prolonged use. This type of degradation, in conjunction with normal abrasive wear, can cause the guide surfaces of chute components to become roughened, thereby impairing their efficiency for guiding and making it more difficult to clean the guide surfaces after use.

Another problem which is present in existing discharge chute assemblies involves the connections which are used to join extension chutes to each other and to upstream chutes. Most existing systems use a simple hook-loop type connection to make such a connection. Such connections, however, tend to become jammed with wet concrete, which eventually hardens. In addition, clothing can be caught on the sharp hooks and other edges of such joints. Furthermore, prior art joints are often difficult to fasten and release, particularly by a single person.

It is clear that there has existed a long and unfilled need in the art for a discharge chute component which is lighter in weight and is less susceptible to roughening of its guide surfaces than chute components heretofore known.

It is known from US-A-4054194 to provide a discharge chute of the type which is adapted for guiding a concrete mixture from a discharge end of a concrete mixer truck to a desired location and which comprises an ancillary guide structure for conveying the concrete mixture from the discharge end of the truck to the discharge chute, an elongate chute wall having a concave inner guide surface and a convex outer surface, a reinforcing arrangement connected to the chute wall to reinforce the chute wall against bending in the longitudinal direction, and a joining arrangement adapted to join an upstream end of the chute wall to the ancillary guide structure to receive a concrete mixture.

All of the components of the discharge chute in this known arrangement are made of metal, and which is subject to the drawbacks referred to above.

It is also known from DE-U-8110485 to provide a discharge chute assembly for guiding a concrete mixture from an ancillary guide structure, in which a U-shaped segment is made of plastics material.

According to the invention there is provided a discharge chute for guiding a concrete mixture from a concrete mixer truck to a desired location; said discharge chute having a chute wall with a concave inner guide surface and a convex outer surface; said discharge chute including an upstream chute and an extension chute construction, a reinforcing arrangement for reinforcing the chute wall against bending, and a joining arrangement for selectively joining an upstream end of the extension chute construction to a downstream end of the upstream chute; wherein said extension chute construction includes a first extension chute having an upstream end which is releasably connectable via one of said joining arrangements to a downstream end of the upstream chute, and having a downstream end;
characterised in that:
a) a first one of said upstream end of said first extension chute and said downstream end of said upstream chute includes a cammed joint projection thereon;
b) a second one of said upstream end of said first extension chute and said downstream end of said upstream chute includes a cammed socket housing thereon;
c) said socket housing has a recess defined therein for receiving said cammed joint projection; said cammed projection and said cammed socket housing being configured to selectively lock said cammed projection within said socket housing; said socket housing including a pin portion and said projection having a socket defined therein for receiving said pin portion; and said cam construction being constructed and arranged to selectively release said projection from said socket housing when a downstream end of said first extension chute is raised relative to said downstream end of said upstream chute;
d) the chute wall of the first extension chute comprises a high strength, lightweight polymeric material which tends to remain smooth during wear;
e) said reinforcing arrangement includes a plurality of longitudinal ribs unitary with, and fabricated of, the same material as the chute wall of the first extension chute; said longitudinal ribs being integral with a convex outer surface of the first extension chute; and
f) said first extension chute has a diagonal cross-bracing rib arrangement on the convex outer surface, for reinforcement against torsional forces.

For a better understanding of the invention, its advantages, and the objects obtained by its use, reference should be made to the drawings which form a further part hereof, and to the accompanying descriptive matter, in which there is illustrated and described a preferred embodiment of the invention.
Figure 1 is a perspective view of a mobile concrete mixing and delivery system according to a first preferred embodiment of the invention;
Figure 2 is a fragmentary exploded perspective view of a chute assembly according to the embodiment of Figure 1;
Figure 3 is a bottom isolational view of a component of the chute assembly that is illustrated in Figures 1 and 2;
FIGURE 4 is a side elevational view of the component depicted in Figure 3;
FIGURE 5 is a cross sectional view taken along lines 5-5 in Figure 4;
FIGURE 6 is a first diagrammatical cross-sectional view taken along lines 7-7 in Figure 2 illustrating a releasable extension chute connecting joint according to the embodiment of Figures 1-5 in a first, released position;
FIGURE 7 is a diagrammatical cross-sectional view similar to Figure 6, with the releasable extension chute connecting joint depicted in a second, locked position;

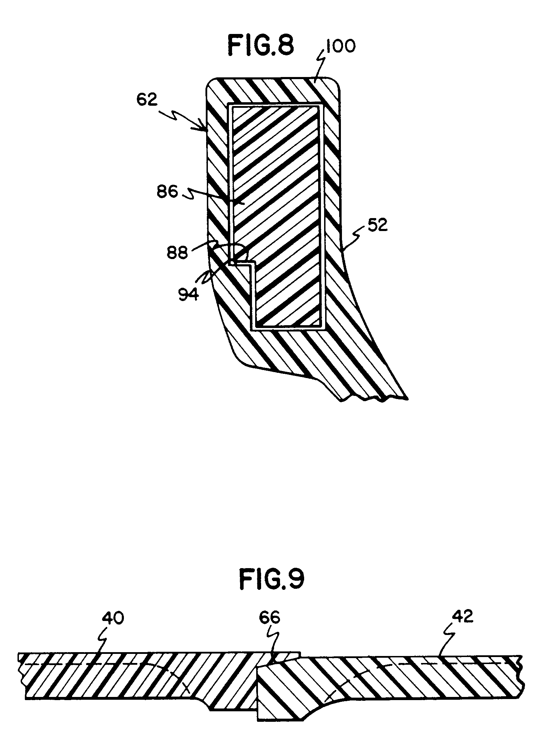

FIGURE 8 is a cross-sectional view taken along lines 8-8 in Figure 7; and
FIGURE 9 is a cross-sectional view taken along lines 9-9 in Figure 1.

### DETAILED DESCRIPTION OF THE PREFERRED EMBODIMENT(S)

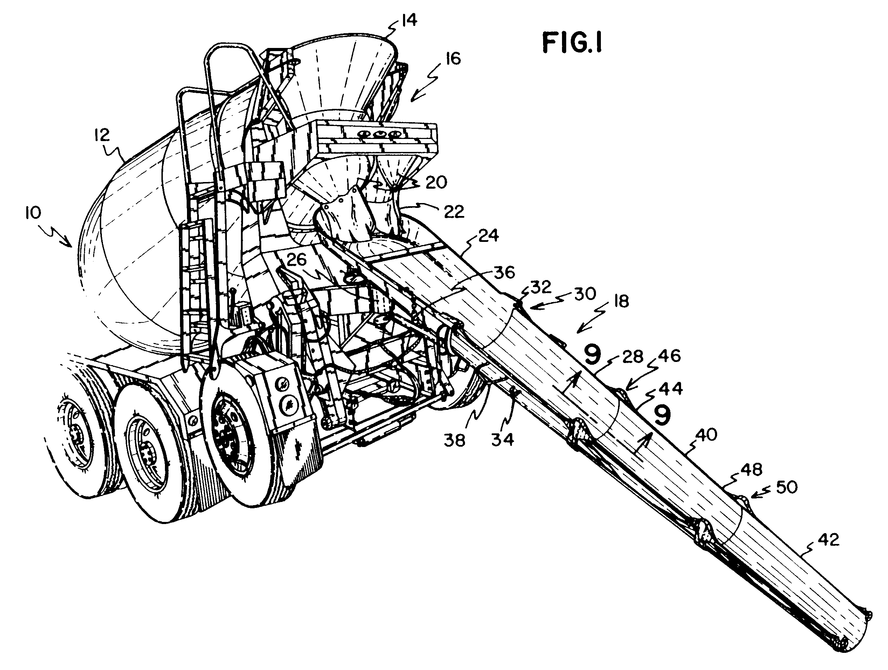

Referring now to the drawings, wherein like reference numerals designate corresponding structure throughout the views, and referring in particular to Figure 1, a mixing truck 10 includes a mixing drum 12 for mixing and dispensing concrete, a fill chute funnel 14 for charging the mixing drum 12, and a discharge mechanism 16 for guiding concrete mixture into a discharge chute assembly 18. The discharge mechanism 16 includes a pair of discharge funnel guides 20 and a flexible guide curtain 22 for guiding concrete mixture into a main discharge chute 24. In a manner that is common in the art, main discharge chute 24 is adjustably mounted with respect to a chassis of mixing truck 10 by a pivot mechanism 26. As a result, main discharge chute 24 may be pivoted toward a set of forms or other location where concrete mix is to be applied.

As is additionally shown in Figure 1, a second, fold-over chute 28 is mounted to a downstream end of main discharge chute 24 by a hinge type joint 30. Hinge type joint 30 is of standard construction and includes a set of pivot pins 32 about which fold-over chute 28 may pivot with respect to the body of main discharge chute 24. When fold-over chute 28 is in its operative position, as is illustrated in Figure 1, its longitudinal axis is substantially coincident with a longitudinal axis of main discharge chute 24. During periods of non-use such as when mixing truck 10 is in motion, the main body of fold-over chute 28 may be pivoted to a position over main discharge chute 24. In this latter position, fold-over chute 28 may be held in place by means of a retaining hook 36, which engages a bracket 34 on fold-over chute 28. A pair of handles 38 are molded into a side surface of fold-over chute 28 for pivoting discharge chute assembly 18 about the axis provided by pivot mechanism 26.

Looking again to Figure 1, discharge chute assembly 18 further includes a first extension chute 40 and at least a second extension chute 42. First extension chute 40 has an upstream end 44 which is releasably joined to a downstream end of foldout chute 28 by a first releasable extension chute connecting joint 46. Second extension chute 42 is joined to a downstream end 48 of first extension chute 40 by a second releasable chute connecting joint 50 which is identical in purpose and construction to first releasable extension chute connecting joint 46. The construction of first and second releasable extension chute connecting joints 46, 50 is an important part of the invention, and will be explained in greater detail hereinbelow.

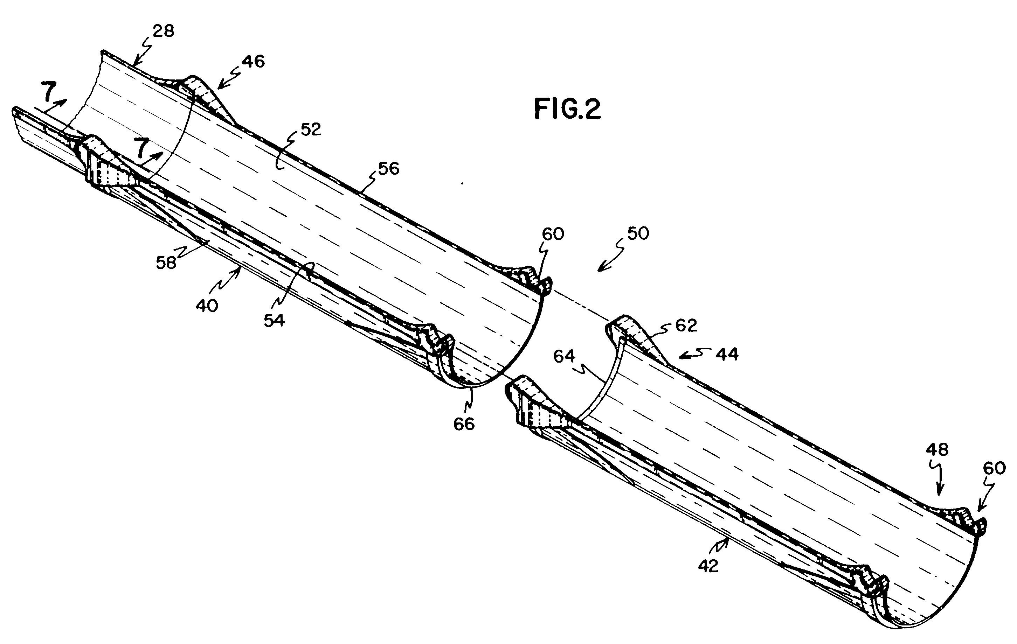

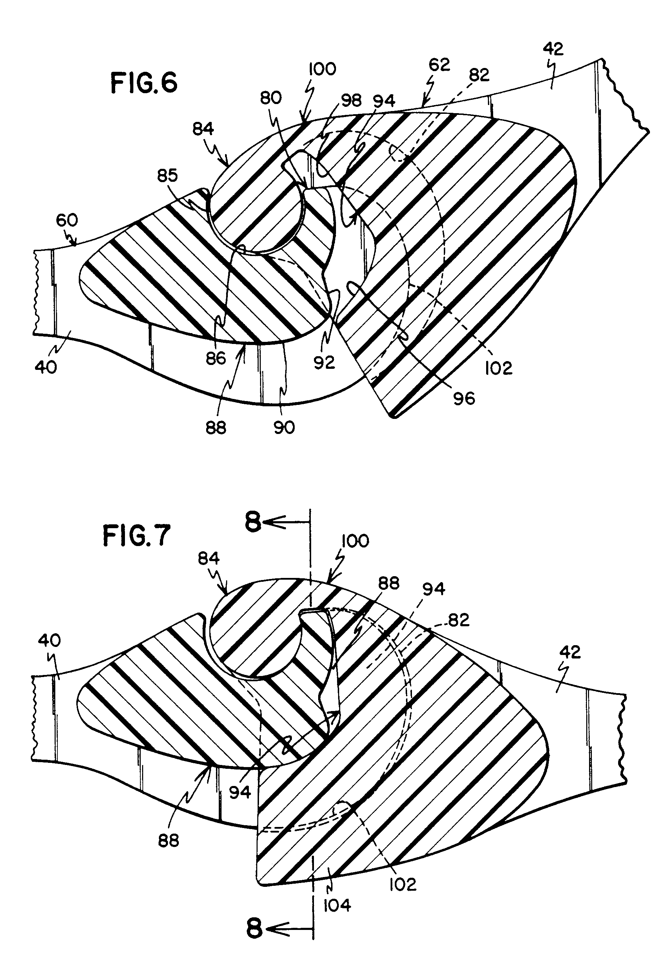

Referring now to Figures 2 and 5, first extension chute 40, which is identical in construction to second chute 42, includes a chute wall 78 which is shaped to define a concave inner guide surface 52 between a first chute rim 54 and a first chute rim 56. Chute wall 78 further defines a convex outer surface 58 which is substantially concentric with the concave inner guide surface 52. Second extension chute 42 is similarly constructed.

As is shown in Figure 2, a downstream end of first extension chute 40 is provided with a pair of symmetrically constructed cammed joint projections 60 which are constructed so as to be received within a corresponding pair of cammed socket housings 62. The details of construction for the cammed joint projections 60 and cammed socket housings 62 will be discussed in appropriate detail with reference to Figures 6 and 7 below. A projecting lip 66 extends from the downstream end of first extension chute 40 and is receivable within an inner lip-receiving recess 64 which is defined in an inner guide surface of the upstream end 44 of second extension chute 42. This allows the inner guide surface 52 of first extension chute 40 to overlap the corresponding inner guide surface in second extension chute 42 in the region which is proximate connecting joint 50 so as to prevent leakage of concrete mixture from chutes 40, 42 at joint 50.

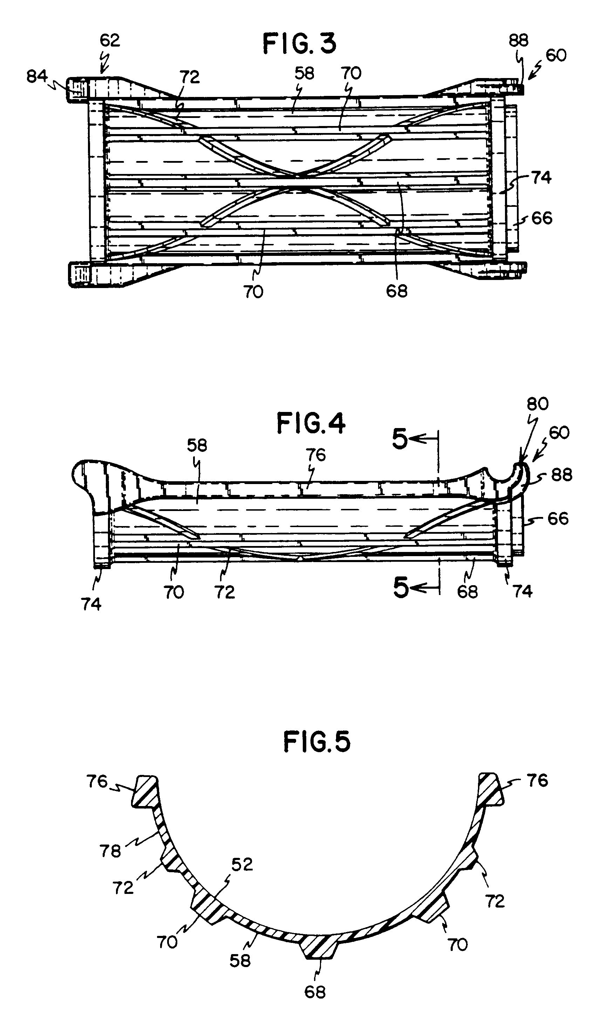

Referring now to Figures 3-5, the construction of an extension chute 40, 42 will now be discussed. In order to reinforce chute wall 78 against bending in the longitudinal direction, a longitudinal center stiffening rib 68 is provided along a longitudinal axis along the outer surface 58 of chute wall 78. In addition, a pair of longitudinal side stiffening ribs 70 are provided on each side of center stiffening rib 68 on a side portion of convex outer surface 58. Both the longitudinal center stiffening rib 68 and the longitudinal side stiffening ribs 70 are unitary with and fabricated of the same material as chute wall 78. In order to reinforce chute wall 78 against torsional forces which might result from twisting one of the chutes 40, 42, four diagonal cross bracing ribs 72 are provided, as is best shown in Figure 3. Each of the cross bracing ribs 72 are unitary with the convex outer surface 58 of chute wall 78 and extends from a mid-point of the longitudinal center stiffening rib 68 to a thickened top edging portion of the chute 40, 42 which defines the first and second chute rims 54, 56. Each chute 40, 42 is further provided with a thickened end edging portion 74 which is constructed to withstand the compressive forces which are created at the joints 46, 50.

Looking now to Figures 6 and 7, cammed joint projection 60 includes a hook member 80 which is also visible in Figure 4. As may be seen in Figures 6 and 7, hook member 80 is receivable within a complementary hook-receiving recess which is defined in cammed socket housing 62 by a surface 82. Cammed socket housing 62 further includes a pin portion 84 which has a convex, downwardly facing engagement surface 85. As may be seen in Figures 6 and 7, the engagement surface 85 of pin portion 84 is configured so as to be tightly receivable within a socket which is defined in cammed joint production 60 by a surface 86.

As may be seen in Figures 4, 6 or 7, a projecting cam structure on cammed joint projection 60 defines a first cam surface 88 having a first section 90 and a second section 92. A second cammed surface 94 is defined by cammed socket housing 62. Second cammed surface 94 includes a first section 96 and a second section 98. The first and second cammed surfaces 88, 94 are shaped so that the respective first camm sections 90, 96 will engage when the joint 50 is in the locked position.

It should be understood that the structure of first releasable extension chute connecting joint 46 is identical to the structure which is described above with reference to joint 50.

According to one important aspect of the invention, main chute 24, fold-over chute 28, the first and second extension chutes 40, 42 and the respective connecting joints 46, 50 are fabricated from a high strength, lightweight polymeric material. The use of any polymer which has a relatively low frictional coefficient and which tends to remain smooth as it wears is within the scope of the invention. However, polymeric materials having a high strength to weight ratio are preferred. Cross linked and fiber reinforced polymeric materials are preferable for this reason. The polymer preferably has a base of polyurethane or nylon. At the time of application for patent the most preferred material is Uniroyal 3105 polyurethane, which is available from Uniroyal Chemical Co. An alternative material is a polyurethane marketed as Chempol 300-400 by Freeman Chemical Co.

Since the polymeric material is stronger and more durable than steel based on a given weight of material, a chute according to the invention can be made lighter in weight and yet have equivalent strength to metallic chutes which are in use today.

In operation, mixing truck 10 is positioned adjacent a set of forms or other concrete molds. Fold-over chute 28 is unlimbered and extended to its operative position. Handles 38 are used to pivot fold-out chute 28 toward the forms or molds. At this time, an operator positions the upstream end 44 of first extension chute adjacent the cammed joint projections 60 of fold-over chute 28. The cammed socket housing 62 of first extension chute 40 are kept adjacent the cammed joint projections 60 of fold-over chute 28 while the downstream end of first extension chute 40 is lifted with respect to the upstream end of first extension chute 40. As is shown in Figure 6, the pin portion 84 of each of the cammed socket housings 62 is inserted in the corresponding pin-receiving socket defined by surfaces 86 in the cammed joint projections 60. At the same time, the convex outer surface 102 of cammed joint projection 60 is inserted into the hook-receiving recess which is defined by a surface 82. At this time, the downstream end of first extension chute 40 may be lowered. As this happens, the first cam surface 88 engages the second cam surface 94, thereby locking the cammed joint projection 60 into the cammed socket housing 62, as is shown in Figure 7. As a result, the first extension chute 40 will be securely attached to fold-over chute 28 until it is removed. Second extension chute 42 and subsequent chutes may be connected to the downstream end of first extension chute 40 in a manner which is identical to that described above.

When it is desired to remove first extension chute 40 from fold-over chute 28, the downstream end of first extension chute 40 is lifted with respect to the first releasable extension chute connecting joint 46. This unlocks first cam section 90 from the respective first cam section 96 and permits removal of the cammed joint projection 60 from socket housing 62 in a sequence which is opposite from that described above with reference to the connection procedure.

It is to be understood, however, that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in which the appended claims are expressed.

## Claims

1. A discharge chute (18) for guiding a concrete mixture from a concrete mixer truck (10) to a desired location; said discharge chute (18) having a chute wall with a concave inner guide surface (52) and a convex outer surface (58); said discharge chute including an upstream chute (28) and an extension chute construction (40, 42), a reinforcing arrangement (68, 70) for reinforcing the chute wall (78) against bending, and a joining arrangement (46, 50) for selectively joining an upstream end of the extension chute construction (40, 42) to a downstream end of the upstream chute (28); wherein said extension chute construction includes a first extension chute (40) having an upstream end (44) which is releasably connectable via one of said joining arrangements (46, 50) to a downstream end of the upstream chute (28), and having a downstream end;
characterised in that:
a) a first one of said upstream end of said first extension chute (40) and said downstream end of said upstream chute (28) includes a cammed joint projection (60) thereon;
b) a second one of said upstream end of said first extension chute (40) and said downstream end of said upstream chute (28) includes a cammed socket housing (62) thereon;
c) said socket housing (62) has a recess (82) defined therein for receiving said cammed joint projection (60); said cammed projection and said cammed socket housing being configured to selectively lock said cammed projection within said socket housing; said socket housing including a pin portion (84) and said projection (60) having a socket (86) defined therein for receiving said pin portion (84); and said cam construction being constructed and arranged to selectively release said projection (60) from said socket housing (62) when a downstream end of said first extension chute (40) is raised relative to said downstream end of said upstream chute (28);
d) the chute wall of the first extension chute (40) comprises a high strength, lightweight polymeric material which tends to remain smooth during wear;
e) said reinforcing arrangement includes a plurality of longitudinal ribs (68, 70) unitary with, and fabricated of, the same material as the chute wall (78) of the first extension chute (40); said longitudinal ribs being integral with a convex outer surface (58) of the first extension chute (40); and
f) said first extension chute (40) has a diagonal cross-bracing rib arrangement (72) on the convex outer surface (58), for reinforcement against torsional forces.

2. A discharge chute according to Claim 1, and including a second extension chute (42) having an upstream end which is detachably connectable to a downstream end of the first extension chute (40);
characterised in that:
a) a first one of said downstream end of said first extension chute (40) and said upstream end of said second extension chute (42) include a cammed joint projection (60) thereon;
b) a second one of said downstream end of said first extension chute (40) and said upstream end of said second extension chute (42) include a cammed socket housing (62) thereon, said socket housing (62) having a recess (82) defined therein for receiving said cammed joint projection (60); said cammed projection and said cammed socket housing being configured to selectively lock said cammed projection within said socket housing; said socket housing including a pin portion (84) and said projection (60) having a socket (86) defined therein for receiving said pin portion (84); and said cam construction being constructed and arranged to selectively release said projection (60) from said socket housing (62) when a downstream end of said second extension chute (42) is raised relative to said downstream end of said first extension chute (40);
c) the chute wall (78) of the second extension chute (42) comprises a high strength, lightweight polymeric material which tends to remain smooth during wear;
d) said reinforcing arrangement includes a plurality of longitudinal ribs (68, 70) unitary with, and fabricated of, the same material as the chute wall (78) of the second extension chute (42); and said longitudinal ribs being integral with a convex outer surface (58) of the second extension chute (42); and
e) said second extension chute (42) has a diagonal cross-bracing rib arrangement (72) on the convex outer surface (58) thereof, for reinforcement against torsional forces.

3. A discharge chute according to Claim 1 or 2, in which the upstream chute (28) is a fold-over chute.

4. A discharge chute according to Claim 1, characterised in that said material is selected from a group comprising nylon and polyurethanes.

5. A discharge chute according to Claim 1 or 2, characterised in that said chute wall(s) comprises a cross-linked polymer.

6. A discharge chute according to Claim 1 or 2, characterised in that said chute wall(s) comprises a fibre-reinforced polymer.

7. A discharge chute according to Claim 1 or 2, characterised in that said chute wall(s) has relatively low frictional characteristics, thereby increasing the efficiency thereof.

## Patentansprüche

1. Ausgaberutsche (18) zum Leiten eines Betongemisches aus einem Betonmischerfahrzeug (10) an einen gewünschten Ort; wobei die Ausgaberutsche (18) eine Rutschenwand mit einer konkaven inneren Führungsoberfläche (52) und einer konvexen äußeren Oberfläche (58) aufweist; die Ausgaberutsche eine stromaufwärtige Rutsche (28) und einen verlängerbaren Rutschenaufbau (40, 42), eine Verstärkungskonstruktion (68, 70) zum Verstärken der Rutschenwand (78) gegen Biegung und eine Verbindungskonstruktion (46, 50) zum wahlweisen Verbinden eines stromaufwärtigen Endes des verlängerbaren Rutschenaufbaus (40, 42) mit einem stromabwärtigen Ende der stromaufwärtigen Rutsche (28) aufweist; der verlängerbare Rutschenaufbau eine erste Verlängerungsrutsche (40) mit einem stromaufwärtigen Ende (44) aufweist, welche lösbar über eine der Verbindungskonstruktionen (46, 50) mit einem stromabwärtigen Ende der stromaufwärtigen Rutsche (28) verbindbar ist, und welche ein stromabwärtiges Ende aufweist;
dadurch gekennzeichnet, daß:
a) ein erstes Ende von dem stromaufwärtigen Ende der ersten verlängerbaren Rutsche (40) und von dem stromabwärtigen Ende der stromaufwärtigen Rutsche (28) einen abstehenden Verbindungsvorsprung (60) daran aufweist;
b) ein zweites Ende des stromaufwärtigen Endes der ersten verlängerbaren Rutsche (40) und des stromabwärtigen Endes der stromaufwärtigen Rutsche (28) eine abstehende Sockelaufnahme (62) daran aufweist;
c) die Sockelaufnahme (62) eine Ausnehmung (82) aufweist, welche darin zur Aufnahme des abstehenden Verbindungsvorsprunges (60) definiert ist; wobei der abstehende Vorsprung und die abstehende Sockelaufnahme so konfiguriert sind, daß sie wahlweise den abstehenden Vorsprung innerhalb der Sockelaufnahme arettieren; wobei die Sockelaufnahme einen Stiftabschnitt (84) aufweist und der Vorsprung (60) einen Sockel (86) besitzt, welcher darin zur Aufnahme des Stiftabschnittes (84) definiert ist; und der abstehende Aufbau so konstruiert und angeordnet ist, daß er den Vorsprung (60) aus der Sockelaufnahme (62) wahlweise freigibt, wenn ein stromabwärtiges Ende der ersten Verlängerungsrutsche (40) relativ zu dem stromabwärtigen Ende der stromaufwärtigen Rutsche (28) angehoben wird;
d) die Rutschenwand der ersten Verlängerungsrutsche (40) ein hochfestes leichtes Polymermaterial aufweist, welches dazu neigt, während des Verschleißes glatt zu bleiben;
e) die Verstärkungskonstruktion eine Vielzahl Längsrippen (68, 70) aufweist, welche einstückig mit demselben Material wie die Rutschenwand (78) der ersten Verlängerungsrutsche (40) sind und aus diesem Material hergestellt sind; wobei die Längsrippen integral mit einer konvexen äußeren Oberfläche (58) der ersten Verlängerungsrutsche (40) sind; und
f) die erste Verlängerungsrutsche (40) eine diagonale Versteifungsrippenkonstruktion (72) auf der konvexen äußeren Oberfläche (58) zum Verstärken gegen Torsionskräfte aufweist.

2. Ausgaberutsche nach Anspruch 1, welche des weiteren eine zweite Verlängerungsrutsche (42) mit einem stromaufwärtigen Ende aufweist, welches lösbar mit einem stromabwärtigen Ende der ersten Verlängerungsrutsche (40) verbindbar ist;
dadurch gekennzeichnet, daß:
a) ein erstes Ende von dem stromabwärtigen Ende der ersten Verlängungsrutsche (40) und dem stromaufwärtigen Ende der zweiten Verlängerungsrutsche (42) einen abstehenden Verbindungsvorsprung (60) daran aufweist;
b) ein zweites Ende von dem stromabwärtigen Ende der ersten Verlängungsrutsche (40) und von dem stromaufwärtigen Ende der zweiten Verlängerungsrutsche (42) eine abstehende Sockelaufnahme (62) daran aufweist, wobei die Sockelaufnahme (62) eine Vertiefung (82) darin aufweist, welche darin zur Aufnahme des abstehenden Verbindungsvorsprunges (60) definiert ist; wobei der abstehende Vorsprung und die abstehende Sockelaufnahme so konfiguriert sind, daß sie den abstehenden Vorsprung innerhalb der Sockelaufnahme selektiv arettieren; die Sockelaufnahme einen Stiftabschnitt (84) aufweist und der Vorsprung (60) einen Sockel (86) besitzt, welcher darin zur Aufnahme des Stiftabschnittes (84) ausgebildet ist; und der abstehende Aufbau so konstruiert und angeordnet ist, daß der Vorsprung (60) aus der Sockelaufnahme (62) selektiv gelöst wird, wenn ein stromabwärtiges Ende der zweiten Verlängerungsrutsche (42) relativ zu dem stromabwärtigen Ende der ersten Verlängerungsrutsche (40) angehoben wird;
c) die Rutschenwand (78) der zweiten Verlängerungsrutsche (42) ein hochfestes leichtes Polymermaterial aufweist, welches dazu neigt, während des Verschleißes glatt zu bleiben;
d) die Versteifungskonstruktion eine Vielzahl von Längsrippen (68, 70) aufweist, welche einheitlich mit demselben Material wie die Rutschenwand (78) der zweiten Verlängerungsrutsche (42) sind und aus diesem Material hergestellt sind; und die Längsrippen integral mit einer konvexen äußeren Oberfläche (58) der zweiten Verlängerungsrutsche (42) sind; und
e) die zweite Verlängerungsrutsche (42) eine diagonale Versteifungsrippenkonstruktion (72) an der konvexen äußeren Oberfläche (58) daran zur Versteifung gegen Torsionskräfte aufweist.

3. Ausgaberutsche nach Anspruch 1 oder 2, bei welcher die stromaufwärtige Rutsche (28) eine umklappbare Rutsche ist.

4. Ausgaberutsche nach Anspruch 1, bei welcher das Material ausgewählt ist aus einer Gruppe, welche aus Nylon und Polyurethanen besteht.

5. Ausgaberutsche nach Anspruch 1 oder 2, bei welcher die Rutschenwand bzw. Rutschenwände aus vernetztem Polymer besteht bzw. bestehen.

6. Ausgaberutsche nach Anspruch 1 oder 2, bei welcher die Rutschenwand bzw. die Rutschenwände ein faserverstärktes Polymer aufweist bzw. aufweisen.

7. Ausgaberutsche nach Anspruch 1 oder 2, bei welchem die Rutschenwand bzw. Rutschenwände relativ niedrige Reibungseigenschaften aufweist bzw. aufweisen, wodurch deren Effizienz erhöht wird.

## Revendications

1. Goulotte de déchargement (18) pour diriger un mélange de béton d'un camion-bétonnière (10) jusqu'en un emplacement désire; ladite goulotte de déchargement (18) comportant une paroi de goulotte présentant une surface de guidage intérieure concave (52) et une surface extérieure convexe (58); ladite goulotte de déchargement comportant une goulotte amont (28) et une construction formant goulotte de prolongement (40, 42), une structure de renforcement (68, 70) destinée à renforcer la paroi de goulotte (78) à l'encontre de la flexion, et une structure de jonction (46, 50) pour joindre sélectivement une extrémité amont de la construction formant goulotte de prolongement (40, 42) à une extrémité aval de la goulotte amont (28) ; dans laquelle ladite construction formant goulotte de prolongement comporte une première goulotte de prolongement (40) présentant une extrémité amont (44) qui peut être reliée, de façon séparable, par l'intermédiaire de l'une desdites structures de jonction (46, 50), à une extrémité aval de la goulotte amant (28), et présentant une extrémité aval;
caractérisée en ce que:
a) une première extrémité choisie entre ladite extrémité amont de ladite première goulotte de prolongement (40) et ladite extrémité aval de ladite goulotte amont (28) comporte, sur elle, une partie saillante d'articulation à profit excentré (60);
b) une seconde extrémité choisie entre ladite extrémité amont de ladite première goulotte de prolongement (40) et ladite extrémité aval de ladite goulotte amont (28) comporte, sur elle, un réceptacle, femelle à profil excentré (62);
c) ledit réceptacle femelle (62) présente, définie en lui, une cavité (82) destinée à recevoir ladite partie saillante d'articulation à profil excentré (60); ladite partie saillante à profil excentré et ledit réceptacle femelle à profil excentré étant dotés d'une configuration permettant de verrouiller sélectivement ladite partie saillante excentrée à l'intérieur dudit réceptacle femelle; ledit réceptacle femelle comportant une partie formant cheville (84) et ladite partie saillante (60) présentant, définie en elle, une cuvette d'articulation (86) destinée à recevoir ladite partie formant cheville (84); et ladite construction à profils excentrés étant conçue et agencée de façon à libérer sélectivement ladite partie saillante (60) dudit réceptacle femelle (62) quand une extrémité aval de ladite première goulotte de prolongement (40) est soulevée par rapport à ladite extrémité aval de ladite goulotte amont (28);
d) la paroi de goulotte de la première goulotte de prolongement (40) comprend un matériau polymère léger, de haute résistance mécanique, qui tend à demeurer lisse en cours d'usure;
e) ladite structure de renforcement comporte plusieurs nervures longitudinales (68, 70) d'une seule pièce avec la paroi de goulotte (78) de la première goulotte de prolongement (40) et réalisées à partir du même matériau que cette paroi; lesdites nervures longitudinales étant d'un seul tenant avec une surface extérieure convexe (58) de la première goulotte de prolongement (40); et
f) ladite première goulotte de prolongement (40) présente un ensemble de nervures d'entretoisement transversal (72), placées en diagonale, sur la surface extérieure convexe (58), en vue d!un renforcement à l'encontre des forces de torsion.

2. Goulotte de déchargement selon la revendication 1, et comportant une seconde goulotte: de prolongement (42) présentant une extrémité amont qui peut être reliée, de façon séparable, à une extrémité aval de la première goulotte de prolongement (40);
caractérisée en ce que:
a) une première extrémité choisie entre ladite extrémité aval de ladite première goulotte de prolongement (40) et ladite extrémité amont de ladite seconde goulotte de prolongement (42) comporte, sur elle, une partie saillante d'articulation à profil excentré (60);
b) une seconde extrémité choisie entre ladite extrémité aval de ladite première goulotte de prolongement (40) et ladite extrémité amont de ladite seconde goulotte de prolongement (42) comporte, sur elle, un réceptacle femelle à profil excentré (62), ledit réceptacle femelle (62) présentant, définie en lui, une cavité (82) destinée à recevoir ladite partie saillante d'articulation à profit excentré (60); ladite partie saillante à profit excentré et ledit réceptacle femelle à profil excentré étant dotés d'une configuration permettant de verrouiller sélectivement ladite partie saillante à profil excentré à l'intérieur dudit réceptacle femelle; ledit réceptacle femelle comportant une partie formant cheville (84) et ladite Partie saillante (60) présentant, définie en elle, une cuvette d'articulation (86) destinée à recevoir ladite partie formant cheville (84); et ladite construction à profil excentré étant conçue et agencée de façon à libérer sélectivement ladite partie saillante (60) dudit réceptacle femelle (62), quand on soulève une extrémité aval de ladite seconde goulotte de prolongement (62) par rapport à ladite extrémité aval de ladite premier goulotte de prolongement (40);
c) la paroi de goulotte (78) de la seconde goulotte de prolongement (42) comprend un matériau polymère léger, de haute résistance mécanique, qui tend à demeurer lisse en cours d'usure;
d) ladite structure de renforcement comporte plusieurs nervures longitudinales (68, 70) d'une seule pièce avec la paroi de goulotte (78) de la seconde goulotte de prolongement (42) et réalisées à partir du même matériau que cette paroi; et lesdites nervures longitudinales étant d'un seul tenant avec une surface extérieure convexe (58) de la seconde goulotte de prolongement (42); et
e) ladite seconde goulotte de prolongement (42) présente un ensemble de nervures d'entretoisement transversal (72), placées en diagonale, sur sa surface extérieure convexe (58), en vue d'un renforcement à l'encontre des forces de torsion.

3. Goulotte de déchargement selon la revendication 1 ou 2, dans laquelle la goulotte amont (28) est une goulotte repliable.

4. Goulotte de déchargement selon la revendication 1, caractérisée en ce que ledit matériau est choisi dans un groupe comprenant le nylon et les polyuréthanes.

5. Goulotte de déchargement selon la revendication 1 ou 2, caractérisée en ce que ladite ou lesdites paroi(s) de goulotte comprennent un polymère réticulé.

6. Goulotte de déchargement selon la revendication 1 ou 2, caractérisée en ce que ladite ou lesdites paroi(s) de goulotte comprennent un polymère renforcé par des fibres.

7. Goulotte de déchargement selon la revendication 1 ou 2, caractérisée en ce que ladite ou lesdites paroi(s) de goulotte présentent des caractéristiques de frottement relativement faible, ce qui augmente leur efficacité.
